# EUROPÄISCHE PATENTANMELDUNG

(11) **EP 4 645 012 A1**
(43) Veröffentlichungstag der Anmeldung: **05.11.2025**
(21) Anmeldenummer: 24173019.1
(22) Anmeldetag: 29.04.2024
(51) Int. Cl.: G05B 23/02

(54) **ERKENNUNG EINER ANOMALIE IM BETRIEB EINES TECHNISCHEN SYSTEMS**

(71) Anmelder: Siemens Aktiengesellschaft, 80333 München (DE)
(72) Erfinder: Denk, Martin, 85256 Vierkirchen (DE); Haager, Dominik, 83052 Bruckmühl (DE)
(74) Vertreter: Siemens Patent Attorneys

(57) **Zusammenfassung**

Die Erfindung betrifft eine Vorrichtung zur Erkennung einer Anomalie im Betrieb eines technischen Systems, umfassend:
• mindestens einen Sensor, der mit dem technischen System gekoppelt ist und der derart eingerichtet ist, zu einem vorgegebenen Zeitpunkt einen Ist-Zustand des technischen Systems zu erfassen,
• einen Simulator, der derart eingerichtet ist, mittels eines computergestützten Simulationsmodells den Betrieb des technischen Systems zu simulieren und einen simulierten Systemzustand zum vorgegebenen Zeitpunkt bereitzustellen,
• eine Bildanalyseeinheit, die derart eingerichtet ist,
• eine zum vorgegebenen Zeitpunkt aufgenommene Infrarotaufnahme von mindestens einem Teil des technischen Systems zu empfangen und anhand der Infrarotaufnahme einen physikalischen Systemzustand zu ermitteln, und/oder
• eine zum vorgegebenen Zeitpunkt aufgenommene Aufnahme im sichtbaren Licht von mindestens einem Teil des technischen Systems zu empfangen und anhand dieser Aufnahme einen Systemzustand des technischen Systems zu ermitteln,
• eine Analyseeinheit, die derart eingerichtet ist, eine Abweichung des Ist-Zustands des technischen Systems von einem vorgegebenen Sollzustand zu ermitteln und im Fall einer signifikanten Abweichung des Ist-Zustands vom Sollzustand, den Ist-Zustand mit dem simulierten Systemzustand, dem physikalischen Systemzustand, und/oder dem aus der Aufnahme ermittelten Systemzustand zu vergleichen und ein Vergleichsergebnis auszugeben,
und
• eine Ausgabeeinheit, die derart eingerichtet ist, in Abhängigkeit des Vergleichsergebnisses eine Warnmeldung über eine Anomalie im Betrieb des technischen Systems auszugeben.

## Beschreibung

Die Erfindung betrifft eine Vorrichtung und ein computerimplementiertes Verfahren zur Erkennung einer Anomalie im Betrieb eines technischen Systems, sowie ein Computerprogrammprodukt.

Technische Systeme, wie z.B. industrielle Anlagen, können Ziele von Cyberangriffen sein. Eine solche Manipulation eines technischen Systems führt beispielsweise zu Anomalien im Systemablauf. Anomalien können auch durch Systemfehler entstehen. Die Erkennung von Anomalien ist somit wichtig, um potenzielle Sicherheitsrisiken zu identifizieren und zu verhindern.

Eine Möglichkeit, Anomalien beim Betrieb eines technischen Systems zu detektieren, ist die Verwendung eines digitalen Zwillings, d.h. einer physikalischen Simulation des technischen Systems. Diese Technologie kann helfen, die Risiken zu minimieren, indem potenzielle Probleme erkannt werden können, bevor sie zu einem größeren Problem werden. Allerdings wird ein digitaler Zwilling typischerweise in regelmäßigen Abständen basierend auf aktuellen Systemdaten des realen Systems aktualisiert. Umgekehrt können die Simulationsdaten des digitalen Zwillings auch an das reale technische System übergeben werden. Im Falle einer Manipulation des realen Systems und/oder des digitalen Zwillings, kann dies jedoch zu einer fehlerhaften Kalibrierung sowohl des digitalen Zwillings als auch des realen Systems führen. Wenn ein digitaler Zwilling zur Erkennung einer Anomalie genutzt wird, könnte eine fehlerhafte Kalibrierung auch dazu führen, dass eine Anomalie unerkannt bleibt.

Weiter existieren eine Reihe von Verfahren zur Detektion einer Anomalie auf Datenbasis, wie z.B. regelbasierte Verfahren, statistische Verfahren, sowie Klassifikation, Clustering und Regression. Außerdem kann maschinelles Lernen (engl. Machine Learning) als Technik eingesetzt werden, um Anomalien in Daten zu erkennen. Häufig ist es jedoch nicht möglich sämtliche Zustände eines technischen Systems datenbasiert zu erfassen. Außerdem haben diese Methoden den Nachteil, dass oft keine zusätzliche Validierung besteht.

Es ist somit eine Aufgabe der vorliegenden Erfindung, eine Erkennung einer Anomalie im Betrieb eines technischen Systems zu verbessern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Erkennung einer Anomalie im Betrieb eines technischen Systems, umfassend:
- mindestens einen Sensor, der mit dem technischen System gekoppelt ist und der derart eingerichtet ist, zu einem vorgegebenen Zeitpunkt einen Ist-Zustand des technischen Systems zu erfassen,
- einen Simulator, der derart eingerichtet ist, mittels eines computergestützten Simulationsmodells den Betrieb des technischen Systems zu simulieren und einen simulierten Systemzustand zum vorgegebenen Zeitpunkt bereitzustellen,
- eine Bildanalyseeinheit, die derart eingerichtet ist,
   o eine zum vorgegebenen Zeitpunkt aufgenommene Infrarotaufnahme von mindestens einem Teil des technischen Systems zu empfangen und anhand der Infrarotaufnahme einen physikalischen Systemzustand zu ermitteln, und/oder
   ∘ eine zum vorgegebenen Zeitpunkt aufgenommene Aufnahme im sichtbaren Licht von mindestens einem Teil des technischen Systems zu empfangen und anhand dieser Aufnahme einen Systemzustand des technischen Systems zu ermitteln,
- eine Analyseeinheit, die derart eingerichtet ist, eine Abweichung des Ist-Zustands des technischen Systems von einem vorgegebenen Sollzustand zu ermitteln und im Fall einer signifikanten Abweichung des Ist-Zustands vom Sollzustand, den Ist-Zustand mit dem simulierten Systemzustand, dem physikalischen Systemzustand, und/oder dem aus der Aufnahme ermittelten Systemzustand zu vergleichen und ein Vergleichsergebnis auszugeben,
   und
- eine Ausgabeeinheit, die derart eingerichtet ist, in Abhängigkeit des Vergleichsergebnisses eine Warnmeldung über eine Anomalie im Betrieb des technischen Systems auszugeben.

Die Erfindung ermöglicht eine automatisierte Auswertung von Daten aus verschiedenen Quellen im Kontext der Anomaliedetektion und gegebenenfalls sicheren Kalibrierung. Es ist ein Vorteil der vorliegenden Erfindung, dass Daten aus mehreren Quellen genutzt werden, um einen Systemzustand eines technischen Systems zu überwachen. Dies führt zu einem umfassenderen Verständnis einer Situation oder eines Problems eines technischen Systems. Im Fehlerfall kann anhand der Daten aus verschiedenen Datenquellen ein umfassenderes Verständnis des Fehlers erlangt werden. Außerdem können Verzerrungen vermieden werden, da bei einer Abweichung mindestens eine zusätzliche Überprüfung stattfindet. Wohingegen bei einer Erkennung einer Anomalie anhand von Daten aus lediglich einer Datenquelle aufgrund technischer Ungenauigkeiten, äußeren Einflüssen und/oder verfälschter Information falsche Schlüsse gezogen werden können. Die Nutzung mehrerer Datenquellen kann solche Verzerrungen ausgleichen und das Risiko von Fehlentscheidungen aufgrund mangelnder oder falscher Informationen verringern. Weiter ist es ein Vorteil, dass die Überprüfung von Informationen aus mehreren Datenquellen die Glaubwürdigkeit und Genauigkeit der Informationen erhöht. Schließlich kann auch eine gründlichere Analyse im Fehlerfall durchgeführt werden.

In einer vorteilhaften Ausführungsform kann die Vorrichtung weiter eine Netzwerküberwachungseinheit umfassen, die derart eingerichtet ist, eine Netzwerkauslastung eines mit dem technischen System gekoppelten Netzwerks zu erfassen und einen Netzwerkzustand bereitzustellen.

Dies ermöglicht beispielsweise einen Angriff über das Netzwerk zu erkennen. Beispielsweise kann eine Abweichung von einem vorgegebenen Sollzustand des Netzwerks, wie z.B. eine Netzwerküberlastung, festgestellt werden.

In einer weiteren Ausführungsform kann die Vorrichtung weiter eine Kalibrierungseinheit umfassen, die derart eingerichtet ist, das computergestützte Simulationsmodell des technischen Systems anhand des erfassten Ist-Zustands des technischen Systems zu kalibrieren, falls keine Anomalie erkannt wurde.

Somit wird das computergestützte Simulationsmodell vorzugsweise nur dann mit aktuellen Daten des technischen Systems aktualisiert, wenn keine Abweichung vom Sollzustand vorliegt. Dies verhindert eine fehlerhafte Kalibrierung des computergestützten Simulationsmodells.

In einer weiteren Ausführungsform kann die Kalibrierungseinheit weiter eingerichtet sein, die Kalibrierung des computergestützten Simulationsmodells in Abhängigkeit des Netzwerkzustands durchzuführen.

Vorzugsweise wird nur dann eine Kalibrierung durchgeführt, wenn der Netzwerkzustand unauffällig ist, d.h. keine Abweichung von einem Sollzustand des Netzwerks vorliegt. So kann sichergestellt werden, dass eine Kalibrierung nicht während eines potentiellen Cyberangriffs, wie z.B. DDoS-Angriff (Distributed Denial of Service), durchgeführt wird.

In einer weiteren Ausführungsform kann die Vorrichtung eine Steuerungseinheit umfassen, die derart eingerichtet ist, in Abhängigkeit des Vergleichsergebnisses und/oder des Netzwerkzustands das technische System auf Basis des computergestützten Simulationsmodells zu steuern.

Beispielsweise können mittels des computergestützten Simulationsmodells Simulationsdaten zur Steuerung des technischen Systems bestimmt werden. Vorzugsweise werden diese Simulationsdaten zur Steuerung lediglich dann verwendet, wenn das Vergleichsergebnis keine Abweichung vom Sollzustand des technischen Systems anzeigt und/oder die Netzwerkauslastung innerhalb eines vorgegebenen Toleranzbereichs liegt.

In einer weiteren Ausführungsform kann die Aufnahme im sichtbaren Licht eine Benutzerschnittstelle umfassen und die Bildanalyseeinheit kann so eingerichtet sein, einen Systemzustand anhand dieser Aufnahme der Benutzerschnittstelle (engl. "Human-Machine-Interface", Abk.: HMI) zu ermitteln.

Beispielsweise kann eine Benutzerschnittstelle einen Schalter oder Regler zeigen. Anhand eines Bildes/Fotos kann somit ein Systemzustand, wie z.B. "An/Aus" einer Funktion, ermittelt werden.

In einer weiteren Ausführungsform kann die Vorrichtung eine zweite Analyseeinheit umfassen, die derart eingerichtet ist, sich entsprechende Systemzustände des Sensors, des Simulators und/oder der Bildanalyseeinheit miteinander zu koppeln.

Beispielsweise können die verschiedenen Systemzustände in einer Datenstruktur, wie z.B. einer Tabelle, strukturiert erfasst werden. Dies ermöglicht insbesondere einen direkten Vergleich, auf welche Weisen ein Systemzustand erfasst und somit entsprechende Daten miteinander verglichen werden können.

In einer weiteren Ausführungsform kann die Bildanalyseeinheit eingerichtet sein, mittels eines ersten trainierten Machine-Learning-Modells aus der Infrarotaufnahme den physikalischen Systemzustand zu ermitteln, wobei das erste Machine-Learning-Modell darauf trainiert wurde, anhand einer pixelweise segmentierten Infrarotaufnahme des technischen Systems, Sensorwerte und/oder simulierte Systemzustände zu reproduzieren bzw. zu erkennen.

In einer weiteren Ausführungsform kann die Bildanalyseeinheit eingerichtet sein, mittels eines zweiten trainierten Machine-Learning-Modells aus der Aufnahme im sichtbaren Licht den Systemzustand zu ermitteln, wobei das zweite Machine-Learning-Modell darauf trainiert wurde, anhand einer pixelweise segmentierten Aufnahme im sichtbaren Licht des technischen Systems, Sensorwerte und/oder simulierte Systemzustände zu reproduzieren.

Gemäß einem zweiten Aspekt betrifft die Erfindung ein computerimplementiertes Verfahren zur Erkennung einer Anomalie im Betrieb eines technischen Systems mit den Verfahrensschritten:
- Erfassen eines Ist-Zustands des technischen Systems zu einem vorgegebenen Zeitpunkt mittels mindestens einem Sensor, der mit dem technischen System gekoppelt ist,
- Simulieren des Betriebs des technischen Systems mittels eines computergestützten Simulationsmodells und Bereitstellen eines simulierten Systemzustands zum vorgegebenen Zeitpunkt,
- Empfangen einer zum vorgegebenen Zeitpunkt aufgenommenen Infrarotaufnahme von mindestens einem Teil des technischen Systems und Bereitstellen und Ermitteln eines physikalischen Systemzustands anhand der Infrarotaufnahme und/oder Empfangen einer zum vorgegebenen Zeitpunkt aufgenommen Aufnahme im sichtbaren Licht von mindestens einem Teil des technischen Systems und Ermitteln eines Systemzustands des technischen Systems anhand dieser Aufnahme,
- Ermitteln einer Abweichung des Ist-Zustands des technischen Systems von einem vorgegebenen Sollzustand und im Fall einer signifikanten Abweichung des Ist-Zustands vom Sollzustand, Vergleichen des Ist-Zustands mit dem simulierten Systemzustand, dem physikalischen Systemzustand, und/oder dem aus der Aufnahme ermittelten Systemzustand und Ausgeben eines Vergleichsergebnisses, und
- Ausgeben einer Warnmeldung über eine Anomalie im Betrieb des technischen Systems in Abhängigkeit des Vergleichsergebnisses.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der erfindungsgemäßen Vorrichtung und des erfindungsgemäßen Verfahrens sind in den Zeichnungen beispielhaft dargestellt und werden anhand der nachfolgenden Beschreibung näher erläutert. Es zeigen:
Fig. 1: zeigt ein Ausführungsbeispiel einer erfindungsgemäßen Vorrichtung zur Erkennung einer Anomalie im Betrieb eines technischen Systems; und
Fig. 2: zeigt ein Ausführungsbeispiel eines erfindungsgemäßen Verfahrens zur Erkennung einer Anomalie im Betrieb eines technischen Systems.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

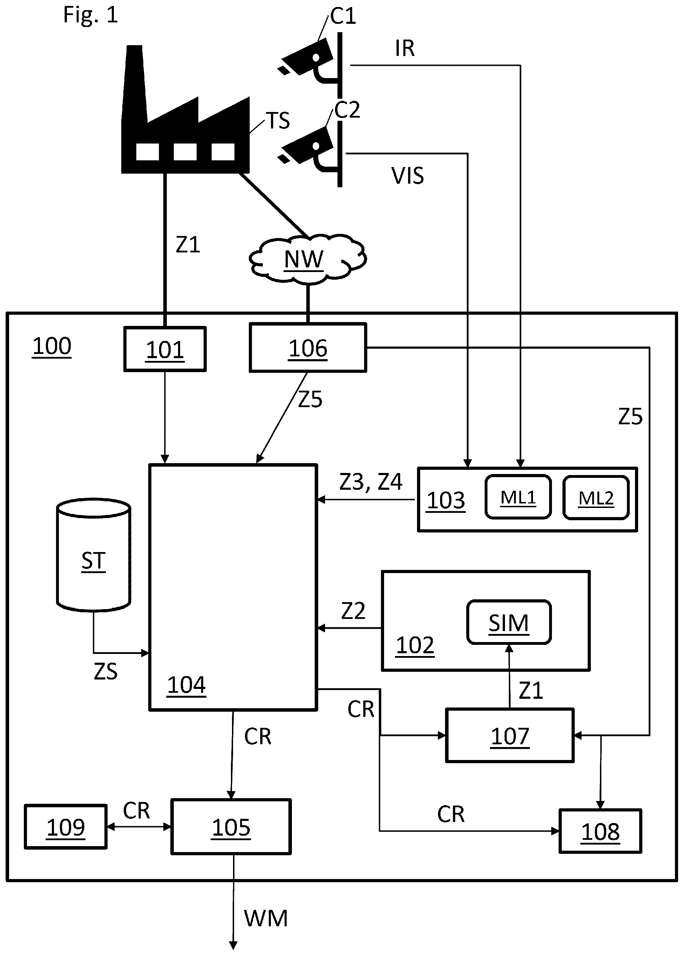

Figur 1 zeigt ein Ausführungsbeispiel einer erfindungsgemäßen Vorrichtung 100 zur Erkennung einer Anomalie, d.h. einer Abweichung oder Unregelmäßigkeit von einem Sollzustand/einer Norm bzw. einem festgelegten Zustand, im Betrieb eines technischen Systems TS, wie z.B. einer Fabrikanlage oder einer Maschine in einer Fabrikanlage.

Die Vorrichtung 100 umfasst mindestens einen Sensor 101, einen Simulator 102, eine Bildanalyseeinheit 103, eine Analyseeinheit 104 und eine Ausgabeeinheit 105. Außerdem kann die Vorrichtung 100 mindestens einen Prozessor und eine Speichereinheit ST umfassen. Die Vorrichtung 100 ist vorzugsweise mit dem technischen System TS über eine Datenverbindung gekoppelt. Die Vorrichtung 100 kann darüber hinaus noch eine Netzwerküberwachungseinheit 106, eine Kalibrierungseinheit 107, eine Steuerungseinheit 108 und/oder eine zweite Analyseeinheit 109 umfassen.

Beispielsweise kann die Vorrichtung 100 eine Vielzahl von mit dem technischen System TS gekoppelten Sensoren sowie eine Vielzahl von Kameras oder Infrarotkameras in der Umgebung des technischen Systems TS nutzen. Auf diese Weise können eine Vielzahl von Datenquellen bereitgestellt und für die Anomaliedetektion genutzt werden.

Mit der Vorrichtung 100 kann eine Art von Sensorfusion umgesetzt werden, die auf verschiedenen, unabhängigen Datenquellen basiert. Die unabhängigen Datenquellen können das reale technische System TS, ein physisch-digitaler Zwilling durch eine computergestützte Simulation SIM und bildlich-digitale Zwillinge durch Bilderkennung einer Infrarotkamera C1 und Kamera C2 sein, wobei für jede Datenquelle ein Systemzustand Z2-Z4 bestimmt werden kann, die anschließend miteinander verglichen werden können, um Systemeigenschaften zu bewerten und/oder Anomalien zu erkennen.

Der mindestens eine Sensor 101 ist, beispielsweise über eine Datenverbindung, mit dem technischen System TS gekoppelt, d.h. der Sensor 101 kann z.B. Daten/Informationen vom technischen System TS empfangen und ist somit nicht unabhängig vom technischen System TS. Im Fall einer Manipulation oder eines technischen Defekts des technischen Systems TS, könnte auch der Sensor 101 betroffen sein und somit inkorrekte Sensorwerte liefern.

Der Sensor 101 erfasst Daten über einen Zustand des technischen Systems. Beispielsweise kann es sich um einen Temperatursensor 101 handeln, der als Systemzustand einen Temperaturwert liefert. Der Sensor 101 erfasst zu einem vorgegebenen Zeitpunkt einen Ist-Zustand Z1 des technischen Systems TS, wie z.B. einen Temperaturwert, beispielsweise einer bestimmten Komponente des technischen Systems TS oder des gesamten technischen Systems TS, zu einem vorgegebenen Zeitpunkt.

Der Simulator 102 ist eingerichtet, mittels eines bereitgestellten computergestützten Simulationsmodels SIM den Betrieb des technischen Systems TS zu simulieren und einen simulierten Systemzustand Z2 zum vorgegebenen Zeitpunkt bereitzustellen. Vorzugsweise betrifft der simulierte Systemzustand Z2 die gleiche Komponente bzw. den gleichen Teil des technischen Systems TS wie der gemessene Zustand Z1.

Das computergestützte Simulationsmodell SIM ist derart eingerichtet, das technische System TS abzubilden, so dass ein Betrieb des technischen Systems TS computergestützt simuliert werden kann. Das computergestützte Simulationsmodell SIM kann auch als Digitaler Zwilling des technischen Systems TS bezeichnet werden. Insbesondere kann das computergestützte Simulationsmodell SIM mittels Daten des technischen Systems, wie z.B. der Sensordaten des mindestens einen Sensors 101, aktualisiert bzw. kalibriert werden.

Das computergestützte Simulationsmodell SIM stellt einen simulierten Systemzustand Z2 zum vorgegebenen Zeitpunkt bereit. Beispielsweise kann mit dem computergestützten Simulationsmodell SIM eine thermodynamische Simulation eines Vorgangs während des Betriebs des technischen Systems TS durchgeführt werden und ein simulierter Systemzustand Z2, z.B. ein Temperaturwert der Komponente des technischen Systems TS oder des gesamten technischen Systems TS, ausgegeben werden.

Die Bildanalyseeinheit 103 ist derart eingerichtet, eine zum vorgegebenen Zeitpunkt aufgenommene Infrarotaufnahme IR einer Infrarotkamera C1 von mindestens einem Teil des technischen Systems TS zu empfangen und anhand der Infrarotaufnahme IR einen physikalischen Systemzustand Z3 zu ermitteln. Die Infrarotkamera C1 ist vorzugsweise nicht über eine Datenverbindung mit dem technischen System TS gekoppelt, d.h. vorzugsweise sind die beiden Systeme unabhängig voneinander. Die Infrarotkamera C1 liefert ein Wärmebild des technischen Systems TS. Insbesondere nimmt die Infrarotkamera C1 den Teil bzw. die Komponente des technischen Systems TS auf, welche auch vom Sensor 101 überwacht wird.

Anhand der Infrarotaufnahme IR ermittelt die Bildanalyseeinheit 103 einen physikalischen Systemzustand Z3, wie z.B. einen Temperaturwert.

Zusätzlich oder alternativ ist die Bildanalyseeinheit 103 eingerichtet, eine zum vorgegebenen Zeitpunkt aufgenommene Aufnahme VIS im sichtbaren Licht einer Kamera C2 von mindestens einem Teil des technischen Systems zu empfangen und anhand dieser Aufnahme einen Systemzustand Z4 des technischen Systems zu ermitteln. Die Kamera C2 liefert ein Bild- oder Videoaufnahme vorzugsweise von dem Teil bzw. der Komponente des technischen Systems TS auf, welche auch vom Sensor 101 überwacht wird. Beispielsweise kann die Aufnahme VIS der Kamera C2 eine Temperaturanzeige erfassen, so dass die Bildanalyseeinheit 103 daraus einen Temperaturwert als Systemzustand Z4 des technischen Systems ermitteln kann.

Die Aufnahme VIS im sichtbaren Licht kann beispielsweise eine Benutzerschnittstelle erfassen, so dass die Bildanalyseeinheit 103 anhand dieser Aufnahme VIS der Benutzerschnittstelle einen Systemzustand Z4 anhand dieser Aufnahme ermitteln kann. Anhand eines Bildes/Fotos eines Schalters oder Reglers der Benutzerschnittstelle kann beispielsweise ein Systemzustand, wie z.B. "An/Aus" einer Funktion, ermittelt werden.

Die Bildanalyseeinheit 103 ist vorzugsweise eingerichtet, mittels eines ersten trainierten Machine-Learning-Modells ML1 aus der Infrarotaufnahme IR den physikalischen Systemzustand Z3 zu ermitteln, wobei das erste Machine-Learning-Modell ML1 darauf trainiert wurde, anhand einer pixelweise segmentierten Infrarotaufnahme des technischen Systems, Sensorwerte und/oder simulierte Systemzustände zu reproduzieren.

Zusätzlich oder alternativ kann die Bildanalyseeinheit 103 eingerichtet sein, mittels eines zweiten trainierten Machine-Learning-Modells ML2 aus der Aufnahme VIS im sichtbaren Licht den Systemzustand Z4 zu ermitteln, wobei das zweite Machine-Learning-Modell ML2 darauf trainiert wurde, anhand einer pixelweise segmentierten Aufnahme im sichtbaren Licht des technischen Systems, Sensorwerte und/oder simulierte Systemzustände zu reproduzieren.

Das trainierte erste Machine-Learning-Modell ML1 und/oder das zweite trainierte Machine-Learning-Modell ML2 können beispielsweise von der Speichereinheit ST bereitgestellt werden. Insbesondere kann ein Training des ersten und/oder zweiten Machine-Learning-Modells ML1, ML2 vorab auf einer Trainingseinheit (nicht dargestellt), die Teil der Vorrichtung 100 sein kann, durchgeführt werden. Das erste und/oder zweite Machine-Learning-Modell ML1, ML2 können beispielsweise jeweils als künstliche neuronale Netze ausgestaltet sein. Insbesondere können für das Training des ersten und/oder zweiten Machine-Learning-Modells ML1, ML2 jeweils pixelweise segmentierte Aufnahmen des technischen Systems und Sensorwerte und/oder simulierte Systemzustände aus der computergestützten Simulation nutzen. Dabei wird das erste bzw. zweite Machine-Learning-Modell ML1, ML2 drauf trainiert bei Eingabe der pixelweise segmentierten Aufnahmen des technischen Systems, einen vorgegebenen Sensorwert und/oder simulierten Systemzustand/Sensorwert zu reproduzieren.

Beispielsweise werden aus einem Kamerabild oder Infrarotbild zunächst einzelne Komponenten des technischen Systems pixelweise segmentiert. Diese Segmentierung kann aus verschiedenen Blickwinkeln durchgeführt werden. Für die dargestellten Segmente können beispielsweise Werte aus der Simulation und/oder des realen technischen Systems zum Training des jeweiligen Machine-Learning-Modells ML1, ML2 verwendet werden. Dadurch ergibt sich ein Verfahren, mit dem physikalische Zustände auf Basis der segmentierten Bilder abgeschätzt werden können. Aus der Segmentierung kann für eine Komponente ein physikalischer Wert geschätzt, als Systemzustand Z3, Z4 bereitgestellt und beispielsweise mit einem Sensorwert Z1 verglichen werden.

Ein weiteres Anwendungsbeispiel ist eine Messung eines Füllstandsensors, der einen Füllstand eines Tanks messen kann und als Ist-Zustand Z1 bereitstellt. Zusätzlich kann der Füllstand visuell an einer Benutzerschnittstelle (engl. "Human Machine Interface", HMI) oder direkt an der einer Anzeige des technischen Systems abgelesen und/oder mittels des computergestützten Simulationsmodells SIM simuliert werden und jeweils als Systemzustand ausgegeben werden.

Vorzugsweise werden die jeweiligen Systemzustände und deren jeweiligen Schwankungen/Standardabweichungen in einer Betriebsphase des technischen Systems, in der keine Angriffe oder Anomalien auftreten dürfen, ermittelt: Zunächst werden die Sensorschwankung, die Netzwerkschwankung, sowie die Bildschwankung bei jeweils konstanten Werten erfasst. Damit können die Schwankungen anhand statistischer Modelle modelliert werden. Anschließend werden sämtliche Signale des realen technischen Systems, sämtliche Simulationsdaten der computergestützten Simulation des technischen Systems, sowie die Daten der Infrarotkamera und Kamera aufgezeichnet, um jeweils Sollzustände zu erfassen. In einer anschließenden Betriebsphase kann ein Vergleich der jeweiligen Systemzustände erfolgen, um Angriffe oder eine Anomalie zu erkennen.

Die erfassten Systemzustände Z1 bis Z4 werden an die Analyseeinheit 104 übermittelt. Außerdem wird der Analyseeinheit ein Sollzustand ZS für den vorgegebenen Zeitpunkt übermittelt. Des Sollzustand ZS ist beispielsweise als Datensatz auf der Speichereinheit ST gespeichert und wird von dort an die Analyseeinheit 104 übermittelt. Der Sollzustand ZS gibt beispielsweise einen Temperaturwert mit einer zu erwartenden Standardabweichung an, den das technische System bzw. eine Komponente des technischen Systems zu einem bestimmten Zeitpunkt haben sollte, wenn keine Unregelmäßigkeiten im Betrieb auftreten.

Die Analyseeinheit 104 ist derart eingerichtet eine Abweichung des Ist-Zustands Z1 des technischen Systems TS vom Sollzustand ZS zu ermitteln. Der Ist-Zustand Z1 wird dabei mit dem Sollzustand ZS verglichen. Im genannten Beispiel werden folglich die Temperaturwerte miteinander verglichen. Im Fall einer signifikanten Abweichung des Ist-Zustands Z1 vom Sollzustand ZS, d.h. außerhalb der gegebenen Schwankung/Standardabweichung des Sollzustands ZS, wird der Ist-Zustand Z1 mit dem simulierten Systemzustand Z2, dem physikalischen Systemzustand Z3 aus der Infrarotaufnahme IR, und/oder mit dem aus der Aufnahme VIS ermittelten Systemzustand Z4 verglichen und jeweils ein Vergleichsergebnis CR ausgegeben. Es erfolgt somit im Falle einer signifikanten Abweichung des Ist-Zustands Z1 vom Sollzustand ZS mindestens eine weitere Überprüfung. Insbesondere erfolgt dieser weitere Vergleich unter Berücksichtigung der jeweiligen, vorab bestimmten Schwankungsbreite des jeweiligen Systemzustands. Es liegt somit beim Vergleich des Ist-Zustands Z1 mit einem weiteren ermittelten Systemzustand Z2, Z3, Z4, eine signifikante Abweichung vor, wenn ein Unterschied außerhalb der jeweiligen Standardabweichung vorliegt.

Zum Beispiel kann der Ist-Zustand bei einer signifikanten Abweichung vom Sollzustand ZS mit dem physikalischen Systemzustand Z3 aus der Infrarotaufnahme IR verglichen werden. Da die Infrarotkamera vom technischen System vorzugsweise entkoppelt ist, liefert die Infrarotaufnahme einen unabhängig bestimmten Temperaturwert. Als Vergleichsergebnis CR wird dann beispielsweise eine signifikante Abweichung Sensorwerts Z1 vom physikalischen Wert Z3 oder eine Übereinstimmung der beiden Werte ausgegeben. Beispielsweise wird bei Abweichung des Ist-Zustand Z1 vom physikalischen Systemzustand Z3 ein weiterer Abgleich mit z.B. dem simulierten Systemzustand Z2 durchgeführt, d.h. der Vergleich der verschieden bestimmten Systemzustände erfolgt vorzugsweise iterativ.

Die Ausgabeeinheit 105 ist derart eingerichtet, in Abhängigkeit des Vergleichsergebnisses CR eine Warnmeldung WM über eine Anomalie im Betrieb des technischen Systems auszugeben.

Vorzugsweise wird eine Warnmeldung ausgegeben, wenn mindestens zwei Systemzustände nicht übereinstimmen.

Es kann vorab festgelegt werden, unter welcher Bedingung eine Warnmeldung WM von der Ausgabeeinheit 105 ausgegeben wird, d.h. wie das Vergleichsergebnis CR weiter ausgewertet wird. Beispielsweise wird immer eine Warnmeldung ausgegeben, wenn eine signifikante Abweichung des Ist-Zustands von einem anders bestimmten Systemzustand Z2 bis Z4 erkannt wird. Alternativ wird eine Warnmeldung über den Ist-Zustand Z1 ausgegeben, falls der Ist-Zustand Z1 von mindestens zwei anders bestimmten Systemzuständen Z2-Z4 abweicht. Es ist auch möglich, dass die Warnmeldung zum Beispiel nicht ausgegeben wird, wenn der Ist-Zustand Z1 zwar vom physikalischen Systemzustand Z3 abweicht, aber mit dem simulierten Systemzustand Z2 übereinstimmt. Vorzugsweise erfolgt die Auswertung des Vergleichsergebnisses CR in der zweiten Analyseeinheit 109, die derart eingerichtet ist, sich entsprechende Systemzustände des Sensors, des Simulators und/oder der Bildanalyseeinheit miteinander zu koppeln. Die zweite Analyseeinheit 109 umfasst beispielsweise eine Tabelle der verschieden bestimmten Systemzustände Z2-Z4. Anhand der Tabelle kann beispielsweise bestimmt werden, welche Systemzustände miteinander verglichen werden können.

Die Netzwerküberwachungseinheit 106 ist eingerichtet, eine Netzwerkauslastung eines mit dem technischen System TS gekoppelten Netzwerks NW zu erfassen und einen Netzwerkzustand Z5 bereitzustellen. Der Netzwerkzustand Z5 beschreibt folglich eine Netzwerkauslastung des Netzwerks NW. Das technische System TS kann mit dem Netzwerk NW über eine drahtgebundene oder eine drahtlose Verbindung gekoppelt sein und über das Netzwerk NW Daten mit der Vorrichtung 100 austauschen. Insbesondere kann die Netzwerküberwachungseinheit 106 einen Abgleich mit einem vorgegebenen Sollzustand des Netzwerks durchführen und ein entsprechendes Vergleichsergebnis bereitstellen. So kann beispielsweise lokal die Netzwerkauslastung ausgewertet werden, um z.B. eine sichere Kalibrierung nur bei niedriger Auslastung und somit keiner Denial-of-Service-Attacke sicherzustellen.

Die Kalibrierungseinheit 107 ist derart eingerichtet, das computergestützte Simulationsmodell SIM des technischen Systems anhand des erfassten Ist-Zustands Z1 des technischen Systems TS zu kalibrieren, falls keine Anomalie erkannt wurde. Es erfolgt somit vorzugsweise eine Kalibrierung des computergestützten Simulationsmodels SIM, wenn der Ist-Zustand Z1 nicht vom Sollzustand ZS abweicht bzw. bei einer Abweichung die Auswertung des Vergleichsergebnisses CR ergibt, dass keine Anomalie erkannt wurde.

Vorzugsweise erfolgt eine Kalibrierung des computergestützten Simulationsmodells SIM durch die Kalibrierungseinheit 107 in Abhängigkeit des Netzwerkzustands Z5. Wenn keine signifikante Abweichung des Netzwerkzustands Z5 von einer zu erwartenden Netzwerkauslastung vorliegt, kann eine sichere Kalibrierung erfolgen.

Die Vorrichtung 100 umfasst weiter die Steuerungseinheit 108, die derart eingerichtet ist, in Abhängigkeit des Vergleichsergebnisses CR und/oder des Netzwerkzustands Z5 das technische System TS auf Basis des computergestützten Simulationsmodells SIM zu steuern. Unter "Steuern" kann insbesondere auch eine Nutzung der Simulationsdaten der computergestützten Simulation im Betrieb des technischen Systems verstanden werden, wie z.B. die Nutzung von Simulationsdaten als Eingabewerte für die Steuerungseinheit 108. Beispielsweise kann ein simulierter Temperaturwert Z2 für die Steuerung des technischen Systems TS anstatt des gemessenen Sensorwerts Z1 genutzt werden, wenn gemäß dem Vergleichsergebnis CR keine Anomalie vorliegt und/oder wenn die Netzwerkauslastung normal ist.

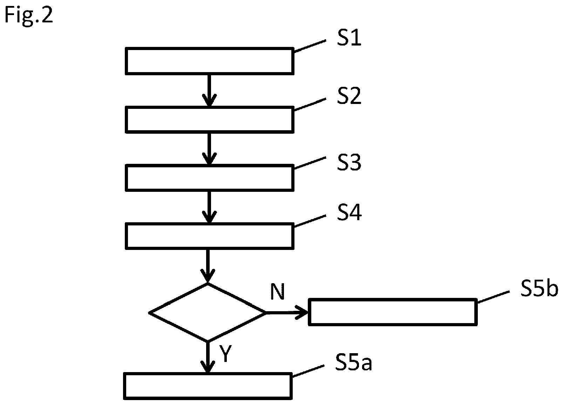

Figur 2 zeigt ein Ausführungsbeispiel des computerimplementierten Verfahrens zur Erkennung einer Anomalie im Betrieb eines technischen Systems. Das Verfahren umfasst folgende Verfahrensschritte:
In einem ersten Schritt S1 wird ein Ist-Zustand des technischen Systems zu einem vorgegebenen Zeitpunkt mittels mindestens einem Sensor erfasst, der mit dem technischen System gekoppelt ist. Es werden beispielsweise Sensorwerte, wie z.B. Temperaturwerte mittels eines Temperatursensors erfasst, und diese als Ist-Zustand bereitgestellt.

Im nächsten Schritt S2 wird der Betrieb des technischen Systems mittels eines computergestützten Simulationsmodells simuliert und ein simulierter Systemzustand zum vorgegebenen, d.h. selben, Zeitpunkt bereitgestellt. Beispielsweise wird derart ein simulierter Temperaturwert bereitgestellt.

Im nächsten Schritt S3 wird eine zum vorgegebenen Zeitpunkt aufgenommenen Infrarotaufnahme von mindestens einem Teil des technischen Systems empfangen. Aus der Infrarotaufnahme wird, beispielsweise mittels eines trainierten Machine-Learning-Modells, ein physikalischer Systemzustand ermittelt und bereitgestellt. Das Machine-Learning-Modell ist vorzugsweise derart trainiert, aus der Infrarotaufnahme den physikalischen Systemzustand zu ermitteln. Beispielsweise kann anhand der Infrarotaufnahme mittels des Machine-Learning-Modells ein Temperaturwert (einer Komponente) des technischen Systems ermittelt werden.

Zusätzlich oder alternativ wird in diesem Schritt S3 eine zum vorgegebenen Zeitpunkt aufgenommene Aufnahme im sichtbaren Licht von mindestens einem Teil des technischen Systems empfangen und anhand dieser Aufnahme ein Systemzustand des technischen Systems ermittelt und bereitgestellt.

Im nächsten Schritt S4 wird überprüft, ob eine Abweichung des Ist-Zustands des technischen Systems von einem vorgegebenen Sollzustand vorliegt. Im Fall Y einer signifikanten Abweichung des Ist-Zustands vom Sollzustand, d.h. wenn eine Abweichung erkannt wurde, wird der Ist-Zustand mit dem simulierten Systemzustand, dem physikalischen Systemzustand, und/oder dem aus der Aufnahme im sichtbaren Licht ermittelte Systemzustand verglichen und ein entsprechendes Vergleichsergebnis ausgegeben.

Anschließend wird im Schritt S5a eine Warnmeldung über eine Anomalie im Betrieb des technischen Systems in Abhängigkeit des Vergleichsergebnisses ausgegeben.

Wenn keine signifikante Abweichung des Ist-Zustands vom Sollzustand vorliegt, Fall N, kann eine Statusmeldung über den Ist-Zustand des technischen Systems ausgegeben werden, Schritt S5b. Außerdem kann in diesem Fall der Ist-Zustand für eine Kalibrierung des Simulationsmodells genutzt werden.

Mit diesem Verfahren können folglich Signale aus unterschiedlichsten Quellen kombiniert und erfasst werden, um Anomalien oder Cyberattacken zu erkennen. Durch die Nutzung verschiedener Quellen kann die Schlüssigkeit der jeweiligen Werte gewährleistet werden. Da unterschiedliche Technologien von Bildverarbeitung, Simulation, Messungen über Sensoren verwendet werden, kann die Robustheit und Zuverlässigkeit des technischen Systems sowie Annomalieerkennung deutlich gesteigert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Erkennung einer Anomalie im Betrieb eines technischen Systems (TS), umfassend:
• mindestens einen Sensor (101), der mit dem technischen System gekoppelt ist und der derart eingerichtet ist, zu einem vorgegebenen Zeitpunkt einen Ist-Zustand (Z1) des technischen Systems zu erfassen,
• einen Simulator (102), der derart eingerichtet ist, mittels eines computergestützten Simulationsmodells (SIM) den Betrieb des technischen Systems (TS) zu simulieren und einen simulierten Systemzustand (Z2) zum vorgegebenen Zeitpunkt bereitzustellen,
• eine Bildanalyseeinheit (103), die derart eingerichtet ist,
o eine zum vorgegebenen Zeitpunkt aufgenommene Infrarotaufnahme (IR) von mindestens einem Teil des technischen Systems zu empfangen und anhand der Infrarotaufnahme einen physikalischen Systemzustand (Z3) zu ermitteln, und/oder
∘ eine zum vorgegebenen Zeitpunkt aufgenommene Aufnahme (VIS) im sichtbaren Licht von mindestens einem Teil des technischen Systems zu empfangen und anhand dieser Aufnahme einen Systemzustand (Z4) des technischen Systems zu ermitteln,
• eine Analyseeinheit (104), die derart eingerichtet ist, eine Abweichung des Ist-Zustands (Z1) des technischen Systems von einem vorgegebenen Sollzustand (ZS) zu ermitteln und im Fall einer signifikanten Abweichung des Ist-Zustands (Z1) vom Sollzustand (ZS), den Ist-Zustand (Z1) mit dem simulierten Systemzustand (Z2), dem physikalischen Systemzustand (Z3), und/oder dem aus der Aufnahme (VIS) ermittelten Systemzustand (Z4) zu vergleichen und ein Vergleichsergebnis (CR) auszugeben,
und
• eine Ausgabeeinheit (105), die derart eingerichtet ist, in Abhängigkeit des Vergleichsergebnisses (CR) eine Warnmeldung (WM) über eine Anomalie im Betrieb des technischen Systems auszugeben.

2. Vorrichtung nach Anspruch 1, weiter umfassend eine Netzwerküberwachungseinheit (106), die derart eingerichtet ist, eine Netzwerkauslastung eines mit dem technischen System gekoppelten Netzwerks (NW) zu erfassen und einen Netzwerkzustand (Z5) bereitzustellen.

3. Vorrichtung nach einem der vorhergehenden Ansprüche, weiter umfassend eine Kalibrierungseinheit (107), die derart eingerichtet ist, das computergestützte Simulationsmodell des technischen Systems anhand des erfassten Ist-Zustands (Z1) des technischen Systems zu kalibrieren, falls keine Anomalie erkannt wurde.

4. Vorrichtung nach einem der vorhergehenden Ansprüche, wobei die Kalibrierungseinheit (107) weiter eingerichtet ist, die Kalibrierung des computergestützten Simulationsmodells in Abhängigkeit des Netzwerkzustands (Z5) durchzuführen.

5. Vorrichtung nach einem der vorhergehenden Ansprüche, weiter umfassend eine Steuerungseinheit (108), die derart eingerichtet ist, in Abhängigkeit des Vergleichsergebnisses (CR) und/oder des Netzwerkzustands (Z5) das technische System (TS) auf Basis des computergestützten Simulationsmodells (SIM) zu steuern.

6. Vorrichtung nach einem der vorhergehenden Ansprüche, wobei die Aufnahme (VIS) im sichtbaren Licht eine Benutzerschnittstelle umfasst und die Bildanalyseeinheit (103) so eingerichtet ist, einen Systemzustand (Z4) anhand dieser Aufnahme der Benutzerschnittstelle zu ermitteln.

7. Vorrichtung nach einem der vorhergehenden Ansprüche, weiter umfassend eine zweite Analyseeinheit (109), die derart eingerichtet ist, sich entsprechende Systemzustände des Sensors, des Simulators und/oder der Bildanalyseeinheit miteinander zu koppeln.

8. Vorrichtung nach einem der vorhergehenden Ansprüche, wobei die Bildanalyseeinheit (103) eingerichtet ist, mittels eines ersten trainierten Machine-Learning-Modells (ML1) aus der Infrarotaufnahme den physikalischen Systemzustand zu ermitteln, wobei das erste Machine-Learning-Modell (ML1) darauf trainiert wurde, anhand einer pixelweise segmentierten Infrarotaufnahme des technischen Systems, Sensorwerte und/oder simulierte Systemzustände zu reproduzieren.

9. Vorrichtung nach einem der vorhergehenden Ansprüche, wobei Bildanalyseeinheit (103) eingerichtet ist, mittels eines zweiten trainierten Machine-Learning-Modells (ML2) aus der Aufnahme im sichtbaren Licht den Systemzustand zu ermitteln, wobei das zweite Machine-Learning-Modell darauf trainiert wurde, anhand einer pixelweise segmentierten Aufnahme im sichtbaren Licht des technischen Systems, Sensorwerte und/oder simulierte Systemzustände zu reproduzieren.

10. Computerimplementiertes Verfahren zur Erkennung einer Anomalie im Betrieb eines technischen Systems mit den Verfahrensschritten:
• Erfassen (S1) eines Ist-Zustands des technischen Systems zu einem vorgegebenen Zeitpunkt mittels mindestens einem Sensor, der mit dem technischen System gekoppelt ist,
• Simulieren (S2) des Betriebs des technischen Systems mittels eines computergestützten Simulationsmodells und Bereitstellen eines simulierten Systemzustands zum vorgegebenen Zeitpunkt,
• Empfangen (S3) einer zum vorgegebenen Zeitpunkt aufgenommenen Infrarotaufnahme von mindestens einem Teil des technischen Systems und Bereitstellen und Ermitteln eines physikalischen Systemzustands anhand der Infrarotaufnahme und/oder Empfangen einer zum vorgegebenen Zeitpunkt aufgenommen Aufnahme im sichtbaren Licht von mindestens einem Teil des technischen Systems und Ermitteln eines Systemzustands des technischen Systems anhand dieser Aufnahme,
• Ermitteln (S4) einer Abweichung des Ist-Zustands des technischen Systems von einem vorgegebenen Sollzustand und im Fall einer signifikanten Abweichung des Ist-Zustands vom Sollzustand, Vergleichen des Ist-Zustands mit dem simulierten Systemzustand, dem physikalischen Systemzustand, und/oder dem aus der Aufnahme ermittelten Systemzustand und Ausgeben eines Vergleichsergebnisses,
und
• Ausgeben (S5a, S5b) einer Warnmeldung über eine Anomalie im Betrieb des technischen Systems in Abhängigkeit des Vergleichsergebnisses (CR).

11. Computerprogrammprodukt, das direkt in einen programmierbaren Computer ladbar ist, umfassend Programmcodeteile, die dazu geeignet sind, die Schritte des Verfahrens nach Anspruch 10 durchzuführen.
